# EUROPEAN PATENT APPLICATION

(11) **EP 3 855 689 A1**
(43) Date of publication of application: **28.07.2021**
(21) Application number: 19862942.0
(22) Date of filing: 06.09.2019
(51) Int. Cl.: H04L 12/917

(54) **METHOD, APPARATUS, AND SYSTEM FOR PROVIDING SERVICE, STORAGE MEDIUM, AND ELECTRONIC DEVICE**

(30) Priority: 18.09.2018 CN 201811089175
(71) Applicant: ZTE Corporation, Shenzhen, Guangdong 518057 (CN)
(72) Inventor: CHEN, Lijuan, Shenzhen, Guangdong 518057 (CN); XIE, Baoguo, Shenzhen, Guangdong 518057 (CN)
(74) Representative: Mozzi, Matteo
(86) International application number: PCT/CN2019/104780
(87) International publication number: WO 2020/057382

(57) **Abstract**

A method, apparatus, and system for providing a service, a storage medium, and an electronic device are provided. The method for providing the service includes: during running of a Network Functions Virtualization Management and Orchestration system (NFV-MANO), adjusting at least one service support capability of at least one service node in the NFV-MANO according to a service requirement, wherein the service node supports adjustment of the service support capability, and the service node provides a service according to the adjusted service support capability. Through the technical solution, the problem in the related art that a service node cannot flexibly support a service requirement is solved, so that the service node can provide a service based on an adjusted service support capability, and the flexibility of the service node is improved.

## Description

The present application claims priority to Chinese Patent Application No. 201811089175.9, filed before the China National Intellectual Property Administration on September, 18, 2018, the disclosure of which is hereby incorporated by reference in its entirety.

### Technical Field

The present disclosure relates to the field of communications, in particular to a method, apparatus, and system for providing a service, a storage medium, and an electronic device.

### Background

Network Functions Virtualization (NFV) is a software processing technology that uses common hardware and a virtualization technology to carry other functions in order to reduce the expensive device cost of a network. Through software and hardware decoupling and function abstraction, the NFV makes network device functions no longer depend on dedicated hardware, and resources can be fully and flexibly shared, which enable rapid development and deployment of new services, and the implementation of automatic deployment, elastic expansion, fault isolation, self-healing and the like based on an actual service requirement.

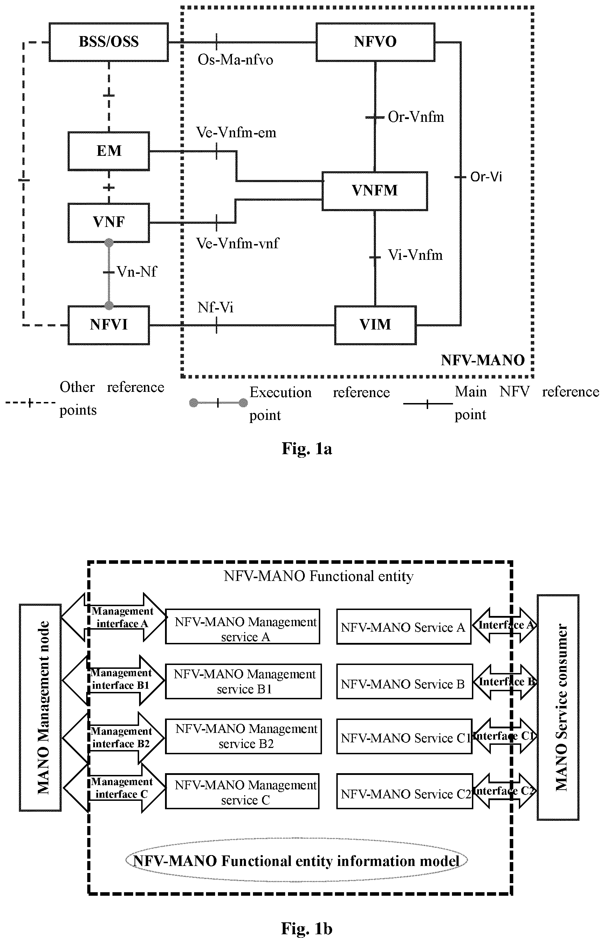

As shown in Fig. 1a, an NFV system architecture defined by the European Telecommunications Standards Institute (ETSI) consists mainly of: an Operation-Support System/Business Support System (OSS/BSS), a Virtualized Network Function (VNF), a Network Functions Virtualization Infrastructure (NFVI), and a VNF-Management and Orchestration system (NFV-MANO). The NFVI is mainly responsible for calculating, storing and comprehensively virtualizing hardware resources of the network and mapping the hardware resources into virtual resources. The VNF uses software to implement various traditional physical network functions. The VNF runs on the NFVI and uses virtual resources virtualized by the NFVI. The NFV-MANO is responsible for managing and orchestrating a relationship between the VNF and the NFVI and a connection relationship between VNFs and/or between the VNF and other Physical Network Functions (PNFs).

As a management node for realizing the NFV, whether an MANO entity runs normally or not has an impact on whether the whole NFV network can be managed and maintained normally or not. Therefore, the operation maintenance and management are needed for each entity constituting the MANO so as to ensure that the NFV-MANO can be implemented normally.

In the related art, the services needing to be supported by the MANO entity, a set of operations supported within a service, and a maximum number of concurrent operations supported are preplanned before deployment and cannot be changed during runtime after deployment, i.e., a static deployment mode is adopted. On the premise of this static deployment mode, failure will be returned in response to the reception of an unsupported service requirement or unsupported service demands; and when the maximum number of concurrent operations of the service reaches a preset bottleneck, failure will be returned in response to new operation requirements or operation demands, and the MANO entity cannot provide normal virtualization management and orchestration services externally.

In view of the above problem in the related art, an effective solution has not been found yet.

### Summary

The following is a brief introduction for subject matter provided in the present disclosure. The brief introduction is not intended to restrict the scope of protection of claims.

The embodiments of the present disclosure provide a method, apparatus, and system for providing a service, a storage medium, and an electronic device, which may at least solve the problem in the related art that a service node cannot flexibly support a service requirement.

According to an embodiment of the present disclosure, a method for providing a service is provided, which may include the following operations. During running of an NFV-MANO, at least one service support capability of at least one service node in the NFV-MANO is adjusted according to a service requirement. In this embodiment, the service node supports adjustment of the service support capability, and the service node provides a service according to the adjusted service support capability.

In one or more exemplary implementations of the embodiment, before the service support capability of the service node in the NFV-MANO is adjusted according to a service requirement, the method may include an operation of determining at least one adjustment pattern supported by the service node.

In one or more exemplary implementations of the embodiment, the adjustment pattern supported by the service node may be determined in the following manner: determining the adjustment pattern supported by the service node according to at least one adjustment pattern parameter. In the one or more exemplary implementations, the adjustment pattern parameter is contained in configuration information of the service node.

In one or more exemplary implementations of the embodiment, the adjusting pattern parameter may include: at least one adjustment mode parameter for representing at least one service support capability parameter, supported to be adjusted, among service support capability parameters of the service node. In the one or more exemplary implementations, the at least one service support capability parameter represents at least one service support capability of the service node.

In one or more exemplary implementations of the embodiment, the service support capability parameter supported to be adjusted may include at least one of the following: a service type supported by the service node, the number of service instances of a specified service type supported by the service node, an interface operation supported by the service node, and the number of concurrent operations of an interface operation supported by the service node.

In one or more exemplary implementations of the embodiment, the operation that the service support capability of the service node in the NFV-MANO is adjusted according to a service requirement may include that: one or more service support capability parameters included in the at least one service support capability parameter supported to be adjusted are adjusted according to an adjustment target based on the at least one service support capability parameter supported to be adjusted. In the one or more exemplary implementations, the adjustment target is determined based on the service requirement and the at least one service support capability of the service node.

In one or more exemplary implementations of the embodiment, the adjusting pattern parameter may further include: an adjustment initiator parameter for representing an adjustment initiator supported by the service node. In the one or more exemplary implementations, the adjustment initiator includes the service node and/or a management node of the service node.

In one or more exemplary implementations of the embodiment, before the service support capability of the service node in the NFV-MANO is adjusted according to a service requirement, the method may further include an operation of determining, according to configuration information of the service node, that the service support capability of the service node is supported to be adjusted.

In one or more exemplary implementations of the embodiment, the configuration information may be an information model of the service node.

In one or more exemplary implementations of the embodiment, before the service support capability of the service node in the NFV-MANO is adjusted according to a service requirement, the method may further include an operation of determining the service requirement according to at least one of the following: a service support capability adjustment request, information of the service node during running, and a preset deployment strategy.

In one or more exemplary implementations of the embodiment, before the service support capability of the service node in the NFV-MANO is adjusted according to a service requirement, the method may further include an operation of determining that the service node meets an adjustment trigger condition. In the one or more exemplary implementations, the adjustment trigger condition includes: reaching a preset adjustment time, receiving a service support capability adjustment request, or information of the service node during running meeting a preset index.

In one or more exemplary implementations of the embodiment, after the service support capability of the service node in the NFV-MANO is adjusted according to a service requirement, the method may include an operation of updating at least one service support capability parameter of the service node according to the adjusted service support capability. In the one or more exemplary implementations, the at least one service support capability parameter represents at least one service support capability of the service node.

In one or more exemplary implementations of the embodiment, after the service support capability of the service node in the NFV-MANO is adjusted according to a service requirement, the method may further include an operation of applying for or releasing corresponding resources according to the adjusted service support capability to make resources of the service node match the service requirement.

According to another embodiment of the present disclosure, an apparatus for providing a service is provided, which may include: an adjustment module, configured to adjust, during running of an NFV-MANO, at least one service support capability of at least one service node in the NFV-MANO according to a service requirement. In the embodiment, the service node supports adjustment of the service support capability, and the service node provides a service according to the adjusted service support capability.

In one or more exemplary implementations of the embodiment, the apparatus may further include: a first determination module, configured to determine, before adjusting the service support capability of the service node in the NFV-MANO according to the service requirement, at least one adjustment pattern supported by the service node.

In one or more exemplary implementations of the embodiment, the first determination module may be further configured to determine the adjustment pattern supported by the service node in the following manner: determining the adjustment pattern supported by the service node according to at least one adjustment pattern parameter, wherein the adjustment pattern parameter is contained in configuration information of the service node.

In one or more exemplary implementations of the embodiment, the adjusting pattern parameter may include: at least one adjustment mode parameter for representing at least one service support capability parameter, supported to be adjusted, among service support capability parameters of the service node, wherein the at least one service support capability parameter represents at least one service support capability of the service node.

In one or more exemplary implementations of the embodiment, the service support capability parameter supported to be adjusted may include at least one of the following: a service type supported by the service node, the number of service instances of a specified service type supported by the service node, an interface operation supported by the service node, and the number of concurrent operations of an interface operation supported by the service node.

In one or more exemplary implementations of the embodiment, the adjustment module may include: an adjustment sub-module, configured to adjust one or more service support capability parameters included in the at least one service support capability parameter supported to be adjusted according to an adjustment target based on the at least one service support capability parameter supported to be adjusted. In the one or more exemplary implementations, the adjustment target is determined based on the service requirement and the at least one service support capability of the service node.

In one or more exemplary implementations of the embodiment, the adjusting pattern parameter may further include: an adjustment initiator parameter for representing an adjustment initiator supported by the service node. In the one or more exemplary implementations, the adjustment initiator comprises the service node and/or a management node of the service node.

In one or more exemplary implementations of the embodiment, the apparatus may further include: a second determination module, configured to determine, according to configuration information of the service node and before adjusting the service support capability of the service node in the NFV-MANO according to the service requirement, that the service support capability of the service node is supported to be adjusted.

In one or more exemplary implementations of the embodiment, the configuration information may be an information model of the service node.

In one or more exemplary implementations of the embodiment, the apparatus may further include: a third determination module, configured to determine, before adjusting the service support capability of the service node in the NFV-MANO according to the service requirement, the service requirement according to at least one of the following: a service support capability adjustment request, information of the service node during running, and a preset deployment strategy.

In one or more exemplary implementations of the embodiment, the apparatus may further include: a fourth determination module, configured to determine, before adjusting the service support capability of the service node in the NFV-MANO according to the service requirement, that the service node meets an adjustment trigger condition. In the one or more exemplary implementations, the adjustment trigger condition includes: reaching a preset adjustment time, receiving a service support capability adjustment request, or information of the service node during running meeting a preset index.

In one or more exemplary implementations of the embodiment, the apparatus may further include: an update module, configured to update, after adjusting the service support capability of the service node in the NFV-MANO according to the service requirement, at least one service support capability parameter of the service node according to the adjusted service support capability. In the one or more exemplary implementations, the at least one service support capability parameter represents at least one service support capability of the service node.

In one or more exemplary implementations of the embodiment, the apparatus may further include: a service resource adjustment module, configured to apply for or release, after adjusting the service support capability of the service node in the NFV-MANO according to the service requirement, corresponding resources according to the adjusted service support capability to make resources of the service node match the service requirement.

According to another embodiment of the present disclosure, a system is provided, which may include the apparatus for providing the service according to any one of the embodiment and one or more exemplary implementations of the embodiment.

According to another embodiment of the present disclosure, a storage medium is also provided. The storage medium may store a computer program that performs the operations in any one of the above method embodiment and one or more implementations of the method embodiment at runtime.

According to yet another embodiment of the present disclosure, an electronic device is also provided. The electronic device may include a memory and a processor. The memory may store a computer program. The processor may be configured to run the computer program to perform the operations in any one of the above method embodiment and one or more implementations of the method embodiment.

Through the above embodiments of the present application, during running of an NFV-MANO, at least one service support capability of at least one service node in the NFV-MANO is adjusted according to a service requirement, so that the service node provides a service according to the adjusted service support capability. The service node supports adjustment of the service support capability. The service support capability of the service node may be adjusted in real time on line according to the service requirement. The problem in the related art that a service node cannot flexibly support a service requirement is solved, so that the service node can provide a service based on an adjusted service support capability, and the flexibility of the service node is improved.

### Brief Description of the Drawings

The accompanying drawings described herein are used to provide a deeper understanding of the present disclosure, and constitute a part of the present application. The exemplary embodiments of the present disclosure and the description thereof are used to explain the present disclosure. The drawings and the exemplary embodiment do not constitute limitations to the present disclosure. In the drawings:
Fig. 1a is a diagram of an ETSI NFV system architecture in the related art of the present disclosure;
Fig. 1b is a schematic composition diagram of an MANO entity defined by an ETSI in the related art of the present disclosure;
Fig. 2 is a flowchart of a method for providing a service according to an embodiment of the present disclosure;
Fig. 3 is a structural block diagram of an apparatus for providing a service according to an embodiment of the present disclosure;
Fig. 4a is a schematic diagram of an MANO entity information model according to an exemplary embodiment of the present disclosure;
Fig. 4b is a schematic diagram of an interaction process of a method for providing a service according to an exemplary embodiment of the present disclosure;
Fig. 5 is a schematic diagram of an interaction process in which a managed node is controlled to adjust the number of internal service instances according to an exemplary embodiment of the present disclosure;
Fig. 6 is a schematic diagram of an interaction process in which a managed node is controlled to adjust an internal service interface operation according to an exemplary embodiment of the present disclosure;
Fig. 7 is a schematic diagram of an interaction process in which a managed node is controlled to adjust an internal service type according to an exemplary embodiment of the present disclosure;
Fig. 8 is a schematic diagram of an interaction process in which a managed node automatically adjusts the number of internal service instances according to an exemplary embodiment of the present disclosure;
Fig. 9 is a schematic diagram of an interaction process in which a managed node automatically adjusts an internal service interface operation according to an exemplary embodiment of the present disclosure; and
Fig. 10 is a flow diagram illustrating one-time adjustment of a VNFM support capability according to an exemplary embodiment of the present disclosure.

### Detailed Description of the Embodiments

The present disclosure is described below in detail with reference to the drawings and in conjunction with the embodiments. It is to be noted that embodiments in the present application and characteristics in the embodiments may be combined to derive other embodiments not explicitly described.

It is to be noted that the terms "first", "second" and the like in the specification, the claims and the drawings of the present disclosure are used to distinguish similar objects, and are not used to describe a specific sequence or a precedence order.

### Embodiment 1

A running architecture of the embodiment of the present application includes: a management node, a managed node and a service consumption node. The management node is configured to manage a service. The managed node, namely a service node, is a provider of the service and is configured to provide the service. The service consumption node is configured to consume the service. The management node, the managed node and the service consumption node may interact with each other.

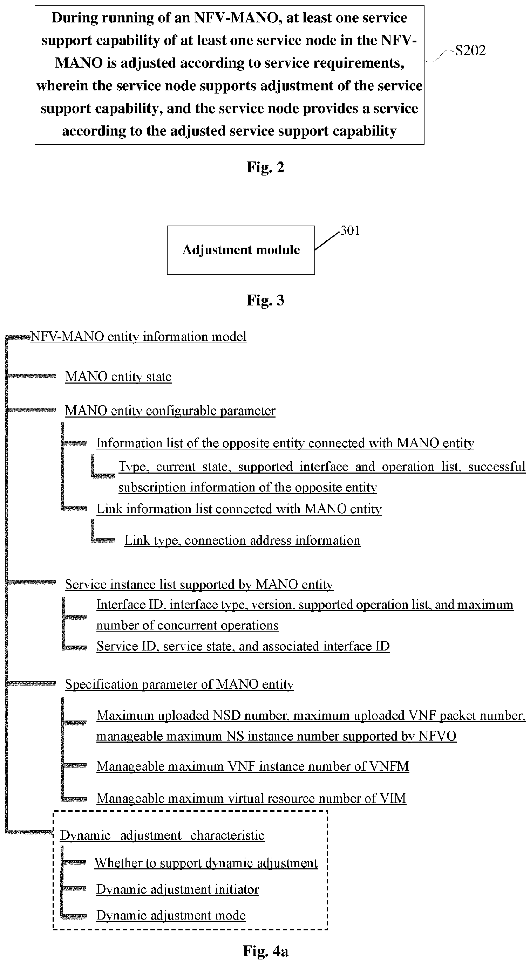

A method for providing a service is provided in the present embodiment. Fig. 2 is a flowchart of a method for providing a service according to an embodiment of the present disclosure. As shown in Fig. 2, the flow includes the following operations.

In operation S202, during running of an NFV-MANO, at least one service support capability of at least one service node in the NFV-MANO is adjusted according to a service requirement. In the embodiment, the service node supports adjustment of the service support capability, and the service node provides a service according to the adjusted service support capability.

Through the above operations, during running of an NFV-MANO, at least one service support capability of at least one service node in the NFV-MANO is adjusted according to a service requirement, so that the service node provides a service according to the adjusted service support capability. The service node supports adjustment of the service support capability. The service support capability of the service node may be adjusted in real time on line according to the service requirement. The problem in the related art that a service node cannot flexibly support a service requirement is solved, so that the service node can provide a service based on an adjusted service support capability, and the flexibility of the service node is improved.

It is to be noted that the execution subject of the operation of adjusting, during running of an NFV-MANO, at least one service support capability of at least one service node in the NFV-MANO according to a service requirement is not limited and may be an entity other than the service node, such as a management entity or a management module in an entity, or the service node, such as an adjustment module of the serving node.

In one or more exemplary implementations of the embodiment, before the service support capability of the service node in the NFV-MANO is adjusted according to a service requirement, the method includes an operation of determining at least one adjustment pattern supported by the service node.

In one or more exemplary implementations of the embodiment, the adjustment pattern supported by the service node is determined in the following manner: determining the adjustment pattern supported by the service node according to at least one adjustment pattern parameter, wherein the adjustment pattern parameter is contained in configuration information of the service node.

In one or more exemplary implementations of the embodiment, the adjusting pattern parameter includes: at least one adjustment mode parameter for representing at least one service support capability parameter, supported to be adjusted, among service support capability parameters of the service node. Herein, the at least one service support capability parameter represents at least one service support capability of the service node.

It is to be noted that the adjustment mode parameter may represent at least one service support capability parameter, supported to be the adjusted, in the service support capability parameters of the service node in a direct and explicit manner. For example, when the adjustment mode parameter is a service type, that is, indicating that the service node supports adjustment of the service type. For another example, when the adjustment mode parameter is a service type and the number of service instances of service type A, that is, indicating that the service node supports adjustment of the service type and also supports adjustment of the number of service instances of service type A; alternatively, indicating that the service node supports simultaneous adjustment of both the service type and the number of service instances of service type A. Of course, in addition to the above explicit manner, other manners may be adopted. The implementation in which the service support capability parameter supported to be adjusted in the service support capability parameters of the service node can be obtained or known by the adjustment mode parameter is within the scope of protection of the present application.

In one or more exemplary implementations of the embodiment, the service support capability parameter supported to be adjusted includes at least one of the following: a service type supported by the service node, the number of service instances of a specified service type supported by the service node, an interface operation supported by the service node, and the number of concurrent operations of an interface operation supported by the service node.

In one or more exemplary implementations of the embodiment, the operation that the service support capability of the service node in the NFV-MANO is adjusted according to a service requirement may includes that: one or more service support capability parameters included in the at least one service support capability parameter supported to be adjusted are adjusted according to an adjustment target based on the at least one service support capability parameter supported to be adjusted. Herein, the adjustment target is determined based on the service requirement and the at least one service support capability of the service node.

It is to be noted that the adjustment target is determined based on the service requirement and the service support capability of the service node. For example, if the number of concurrent operations of a service requirement interface operation is 5, and the service support capability of the current service node indicates that the maximum number of concurrent operations of the interface operation supported by the service node is 4, then the adjustment target may be to adjust the maximum number of concurrent operations of the interface operation to 5 so that the service node can meet the service requirement. It is of course also possible to adjust the maximum number of concurrent operations of the interface operation to a value above 5, for example 8.

In one or more exemplary implementations of the embodiment, the adjusting pattern parameter may further include: an adjustment initiator parameter for representing an adjustment initiator supported by the service node. Herein, the adjustment initiator includes the service node and/or a management node of the service node.

It is to be noted that the adjustment initiator may be a management module in the service node. The management node of the service node may be a management node for managing the service node, or a management module in other nodes (the management node or nodes other than the service node), or a management entity arranged separately.

In one or more exemplary implementations of the embodiment, before the service support capability of the service node in the NFV-MANO is adjusted according to a service requirement, the method may further include an operation of determining, according to configuration information of the service node, that the service support capability of the service node is supported to be adjusted.

In one or more exemplary implementations of the embodiment, the configuration information is an information model of the service node.

In one or more exemplary implementations of the embodiment, before the service support capability of the service node in the NFV-MANO is adjusted according to a service requirement, the method may further include an operation of determining the service requirement according to at least one of the following: a service support capability adjustment request, information of the service node during running, and a preset deployment strategy.

In the implementation of determining the service requirement according to the service support capability adjustment request, the service support capability adjustment request may directly carry an adjustment requirement corresponding to the service requirement (or in other words, an adjustment target). The adjustment requirement indicates a state to which the service node wishes to be adjusted, i.e. the service requirement before adjustment may be obtained based on the service support capability adjustment request. In the implementation of determining the service requirement according to information of the service node during running, an adjustment target capable of meeting the service requirement can be obtained through analysis on the information during running. The adjustment target represents the service requirement and may be used as the service requirement. In the implementation of determining the service requirement according to the preset deployment strategy, the service node is required to meet a certain service requirement according to a preset strategy, so that the service requirement may be obtained or learned through the deployment strategy. In one or more exemplary implementations of the embodiment, before the service support capability of the service node in the NFV-MANO is adjusted according to a service requirement, the method may further include an operation of determining that the service node meets an adjustment trigger condition. Herein, the adjustment trigger condition includes: reaching a preset adjustment time, receiving a service support capability adjustment request, or information of the service node during running meeting a preset index.

The adjustment trigger condition includes reaching a preset adjustment time, which may be applied in the following scenario. For example, an early warning time of some service requirement peak periods may be preset according to historical experience, and adjustment is triggered when the early warning time is reached, so that the rising service requirement may be better met through preparation in advance. The reception of a service support capability adjustment request may also immediately triggers the adjustment. Alternatively, when the information of the service node during running meets a preset index, adjustment may be triggered. For example, when certain parameter indexes are higher than or lower than preset normal thresholds, which indicate that the running state of the service node is abnormal and cannot match the service requirement, the adjustment needs to be triggered.

In one or more exemplary implementations of the embodiment, after the service support capability of the service node in the NFV-MANO is adjusted according to a service requirement, the method includes an operation of updating at least one service support capability parameter of the service node according to the adjusted service support capability. Herein, the at least one service support capability parameter represents at least one service support capability of the service node.

In one or more exemplary implementations of the embodiment, after the service support capability of the service node in the NFV-MANO is adjusted according to a service requirement, the method may further include an operation of applying for or releasing corresponding resources according to the adjusted service support capability to make resources of the service node match the service requirement.

It is to be noted that releasing the corresponding resources to make the resources of the service node match the service requirement can reduce the resource occupation of the service node and achieve the purpose of saving resources.

To illustrate the solution in the above embodiments of the present disclosure, exemplary embodiments of the present disclosure are explained below in connection with the system architecture shown in Fig. 1a and Fig. 1b.

As shown in Fig. 1a, an NFV-MANO (hereinafter abbreviated MANO) includes a plurality of entities, such as a Virtualized Infrastructure Manager (VIM), a Virtual Network Function Manager (VNFM), and a Network Function Virtualization Orchestrator (NFVO), namely a VIM entity, a VNFM entity and an NFVO entity. The VIM is responsible for controlling and managing virtualization resources. The VNFM is responsible for the life cycle management of the VNF. The NFVO is responsible for the orchestration and management of infrastructure and the life cycle management of a Network Service (NS). For example, the VNFM provides a VNF life cycle management service to the NFVO and an MANO performance management service to a manager, where the manager may be the NFVO or a management module separately deployed. The same service type may provide different service instances by connecting different opposites and/or supporting different operation groups.

NFV-MANO service C1 and NFV-MANO service C2 as shown in Fig. 1b are different service instances of the same service type C, and NFV-MANO management service B1 and NFV-MANO management service B2 are different service instances of the same management service B.

The concepts of an MANO entity and its information model are also defined in IFA021 and IFA031. The MANO entity is defined as an entity for completing a single or a group of MANO services. The MANO service is defined as one or more functions externally provided through a standard interface. The information model of the MANO entity encapsulates all relevant information about services that can be provided by the entity, including four parameter sets namely the state of the MANO entity, configurable parameters, a list of supported service instances, and specification parameters. Based on the information in the information model, the maintenance and management of the MANO entity are realized by matching with the maintenance and management function interfaces of the MANO. For example, the manager may set a connection relationship between the MANO entity and its associated entity through a configuration function interface. The list and state of service instances supported by the MANO entity may also be acquired through an information query function interface. The performance of the MANO entity during running may also be acquired through a performance management function interface, and the state of the MANO entity is changed through a state management function interface.

Various scenarios for operational maintenance and management of the MANO entity are analyzed in an ETSI NFV Interfaces and Architectural (IFA) Group Research Report IFA021. IFA031 defines analysis conclusions as normalized. Each MANO entity, while performing the functions defined by other ETSI NFV specifications for virtual resource management orchestration, also requires a functional interface for its own operational maintenance and management. The MANO maintenance and management function interfaces include: an NFV-MANO configuration and information management interface, an NFV-MANO state management interface, an NFV-MANO fault management interface, an NFV-MANO performance management interface, and an NFV-MANO log management interface. Each interface consists of a group of operations. For example, the NFV-MANO configuration and information management interface includes the following operations: ModifyConfig operation, QueryConfigInfo operation, Subscribe operation, Unsubscribe operation, and Notify operation.

A management system may also manage network function nodes through Element Manage (EM). As shown in Fig. 1a, the EM is mainly used for the application layer management of the VNF and is not responsible for managing the MANO entities.

According to the method provided by the embodiment of the present disclosure, whether to support online modification of an MANO support capability and a modification mode of the MANO support capability may be indicated in the MANO entity information model. During the running of the MANO entity, when the support capability of the MANO entity needs to be modified by the MANO management node, the MANO entity is operated according to an online modification mode supported in the MANO information model, and the support capability of the MANO entity is updated on line; or, the MANO entity automatically dynamically adjusts the support capability of the MANO entity according to a predetermined strategy.

According to the embodiment of the present disclosure, an apparatus capable of modifying the service support capability of the MANO entity on line includes the following logic modules: a management node, a managed node and other nodes.

The management node may acquire runtime information of the managed node by consuming an MANO management service provided by the managed node, may judge whether the capability of the managed node needs to be adjusted according to a support capability of the managed node for dynamic adjustment, and may initiate a capability adjustment operation flow of the managed node. The management node may be deployed in existing entities in the NFV system architecture, such as BSS/OSS, EM, NFVI, NFVO, VNFM, and VIM, or may also be a function module deployed independently.

The managed node provides an MANO service and an MANO management service to corresponding consumers, and may realize the dynamic adjustment of the MANO support capability. The managed node may be a constituent entity of any MANO, i.e., an NFVO entity, a VNFM entity, and a VIM entity.

Other nodes are nodes connected with the managed node, and apply for the MANO service to the managed node according to the processing flow of the nodes, so that the performance of the managed nodes is changed according to the number of applications for the MANO service to be processed and the service type. Meanwhile, the performance of the managed nodes also influences the quality of externally provided services, so that the execution results of the processing flows of other nodes are influenced. If the managed node is an NFVO, other nodes are BSS/OSS, VNFM and VIM. If the managed node is a VNFM, other nodes are EM, VNF, NFVO and VIM. If the managed node is a VIM, other nodes are NFVI, NFVO and VNFM.

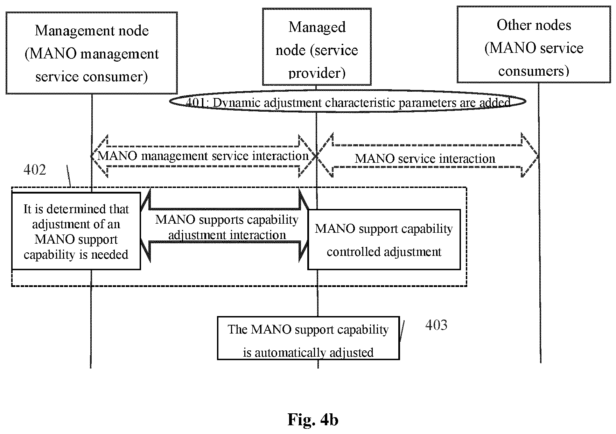

As shown in Fig. 4a and Fig. 4b, according to the embodiment of the present disclosure, a method for dynamically adjusting a service support capability of a managed node includes the following operations.

In operation 401, a dynamic adjustment characteristic parameter is added to an information model of a managed node, which indicates that the node supports the dynamic adjustment of a support capability, as shown in Fig. 4a. The dynamic adjustment characteristic parameter includes the following information: whether dynamic adjustment is supported; an initiator of the dynamic adjustment, where the adjustment is triggered by a management node or automatic adjustment is performed by the managed node according to a running situation.

Further, the adjustment may be carried out in the following manner, and the managed node may support only part of adjustment manners or all of the adjustment manners: the number of change service instances, interface operations of a change service, including but not limited to a list of supported operations and a maximum number of concurrent operations associated with the change service, a service type supported by the change, etc.

In operation 402, during the running of the managed node, the management node and other nodes are provided with services, the management node acquires the running state of the managed node by using an NFV-MANO performance management interface, an NFV-MANO fault management interface and the like, and when the management node judges that the support capability of the managed node needs to be adjusted, if the dynamic adjustment characteristic parameter in the information model indicates that the adjustment is supported to be triggered by the management node, and the management node controls the managed node to complete the support capability adjustment. The management node needs to indicate an adjusted service type and an adjustment target to the managed node.

In operation 403, if the dynamic adjustment characteristic parameter in the information model of the managed node indicates that the automatic adjustment is supported according to the running situation, a corresponding support capability automatic adjustment strategy needs to be provided, and when the managed node meets a condition set by the strategy during running, the managed node automatically completes the support capability adjustment. The support capability automatic adjustment strategy may be issued by the management node or may be a default setting carried in the deployment of the managed node. The support capability automatic adjustment strategy needs to include automatic adjustment trigger conditions, the adjusted service type and the adjustment target. The support capability automatic adjustment strategy may be triggered and executed according to appointed index data, or the automatic adjustment operation may be executed according to a set time.

Further, two logic modules "management node" and "other nodes" may be deployed in the same entity (such as BSS/OSS or NFVO) in the NFV architecture in a unified manner according to different deployment schemes, and may also be deployed in different entities in the NFV architecture in a non-unified manner.

Further, the support of the managed node for the dynamic adjustment capability may not be directly used as an explicit parameter in the information model, and the support for the dynamic adjustment capability and the support manner are indicated to the user and the management node in the manner of software function specification, managed node configuration management and the like.

According to the method and the apparatus provided by the embodiments of the present disclosure, the support capability of the MANO entity may be adjusted according to the running situation, the effect of automatically adjusting the support capability of the MANO entity is achieved, the maintenance and intervention processes of users are reduced, and the automation degree of an NFV network is improved.

The present embodiment may further include the following implementations.

### Exemplary Implementation 1:

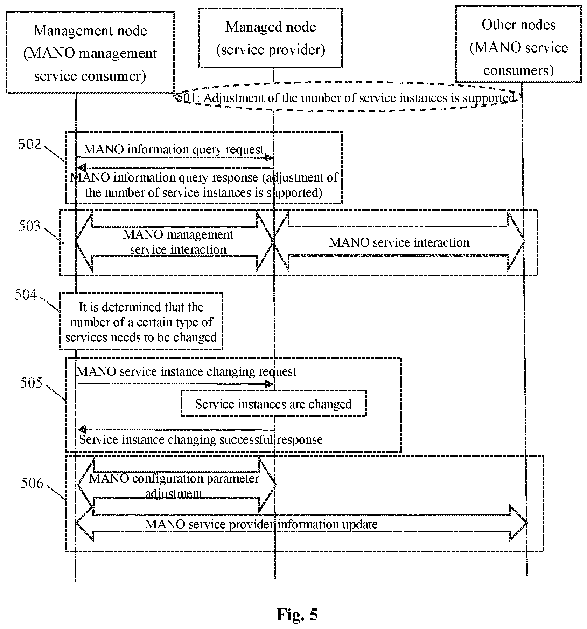

As shown in Fig. 5, by adopting the present embodiment, online adjustment of the number of service instances of a managed node may be realized, and the use scenario example is as follows: in the early stage of network deployment, the VNFM mainly provides a life cycle service of the VNF in order to save the deployment time. At this time, multiple VNF life cycle service instances may be provided in the VNFM entity. After the deployment is completed, a stable operation period is entered, users gradually increase various tasks such as performance management and fault monitoring, the demand of maintenance management services is increased, the number of maintenance management service instances may be increased, and VNF life cycle service instances may be appropriately reduced.

The content of the present disclosure is completed in combination by the following operations.

In operation 501, a managed node supports online adjustment of the number of service instances, and in addition to carrying various information required for initial deployment of the managed node, an information model of the managed node also indicates that adjustment of the number of service instances is supported.

In operation 502, a management node uses an MANO information query request to acquire the information of the managed node, and the managed node adds information that the entity supports adjusting the number of service instances in an information query response.

In operation 503, the managed node provides services, including MANO services and MANO management services, to the management node and other nodes during the running process.

In operation 504, the management node judges that the number of certain service instances needs to be changed according to reported performance data of the managed node, or a maintenance manager directly initiates the change of the number of certain service instances according to the operation and maintenance requirements of the system.

In operation 505, the management node sends a change MANO service instance request to the managed node, carrying a service type needing to be changed and change requirements.

The managed node completes the specified service instance number changing operation according to the request.

The managed node sends a successful response to the management node, carrying a changed service ID.

In operation 506, the management node updates configuration information of the managed node, and updates service link information of the managed node to other nodes that consume the service provided by the entity.

### Exemplary Implementation 2

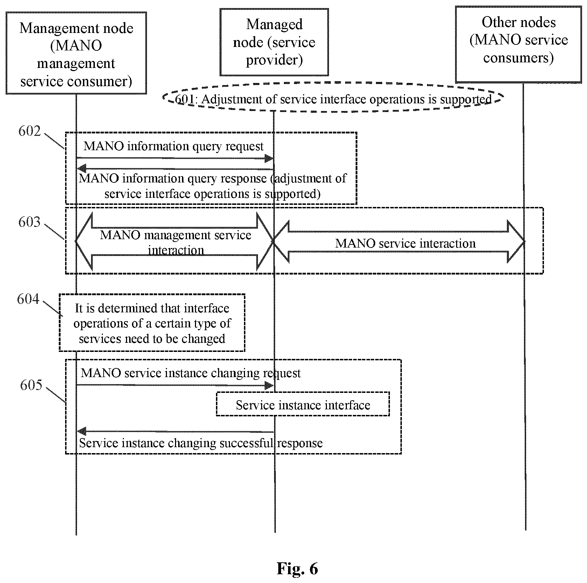

As shown in Fig. 6, by adopting the present embodiment, online adjustment of a service-related interface operation of a managed node may be realized, and the use scenario example is as follows: in the early stages of network deployment, the capabilities of various services of an NFVO entity and specification parameters of the NFVO entity are planned according to current needs. After the deployment is completed, an operational period is entered where a list of supported operations or maximum number of concurrent operations (maximum concurrent operands) for the NFVO service need to be changed as services to be provided by the network or VNFs forming the service are changed.

The content of the present disclosure is completed in combination by the following operations.

In operation 601, a managed node supports online adjustment of a service interface operation, and in addition to carrying various information required for initial deployment of the managed node, an information model of the managed node also indicates that adjustment of the service instance interface operation is supported.

In operation 602, a management node uses an MANO information query request to acquire the information of the managed node, and the managed node adds information that the entity supports adjusting the service interface operation in an information query response.

In operation 603, the managed node provides services, including MANO services and MANO management services, to the management node and other nodes during the running process.

In operation 604, the management node judges that a support operation list or a maximum concurrent operand of certain services needs to be changed according to reported performance data of the managed node, or a maintenance manager directly initiates the change of the support operation list or the maximum concurrent operand of certain services according to the operation and maintenance requirements of the system.

In operation 605, the management node sends a change MANO service instance request to the managed node, carrying a service ID needing to be changed and capability change requirements.

The managed node completes the specified service instance capability changing operation according to the request.

The managed node sends a successful response to the management node.

### Exemplary Implementation 3

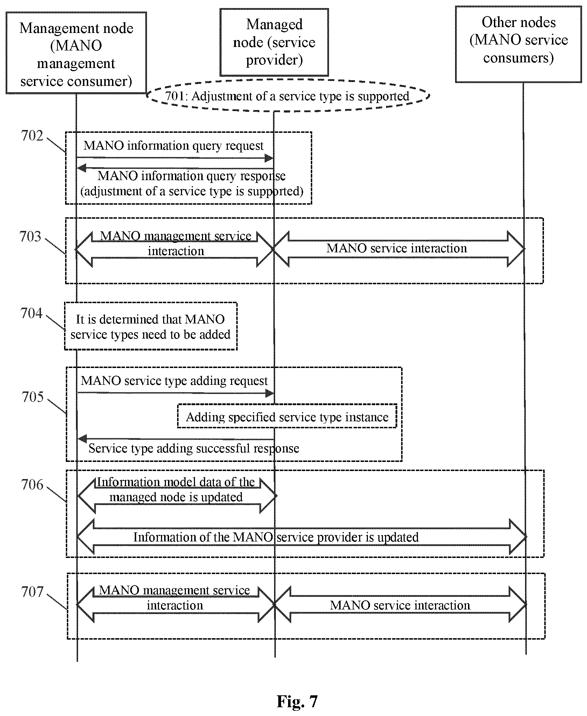

As shown in Fig. 7, by adopting the present embodiment, online adjustment of a service type of a managed node may be realized, and the use scenario example is as follows: in the early stages of network deployment, various services of an MANO entity are planned according to current needs, and services which do not need to be supported may not be deployed. After the deployment is completed, an operational period is entered where services that are not supported at the time of initial deployment need to be added as services to be provided by the network are changed or new NFV entities are added as consumers.

The content of the present disclosure is completed in combination by the following operations.

In operation 701, a managed node supports a capability of online adjustment of a service type, and in addition to carrying various information required for initial deployment of the managed node, an information model of the managed node also indicates a service type that supports adjustment and a service type that does not participate in the initial deployment.

In operation 702, a management node uses an MANO information query request to acquire the information of the managed node, and the managed node adds a capability of the entity supporting adjustment of the service type and an adjustable service type.

In operation 703, the managed node provides services, including MANO services and MANO management services, to the management node and other nodes during the running process.

In operation 704, the management node adds a certain type of service according to a predefined execution strategy, or a maintenance manager directly initiates the addition of a certain type of service according to the operation and maintenance requirements of the system.

In operation 705, the management node sends an MANO service type adding request to the managed node, carrying a service type to be added and the number of instances to be added.

The managed node completes the operation of adding the service type instances according to the request.

The managed node sends a successful response to the management node, carrying an added service instance ID.

In operation 706, the management node issues customer connection information to the added service instance on the managed node, updates service link information of the managed node to other nodes consuming the service, and establishes a link between service providers and customers.

In operation 707, the added service instance of the managed node provides services to the consumers.

### Exemplary Implementation 4

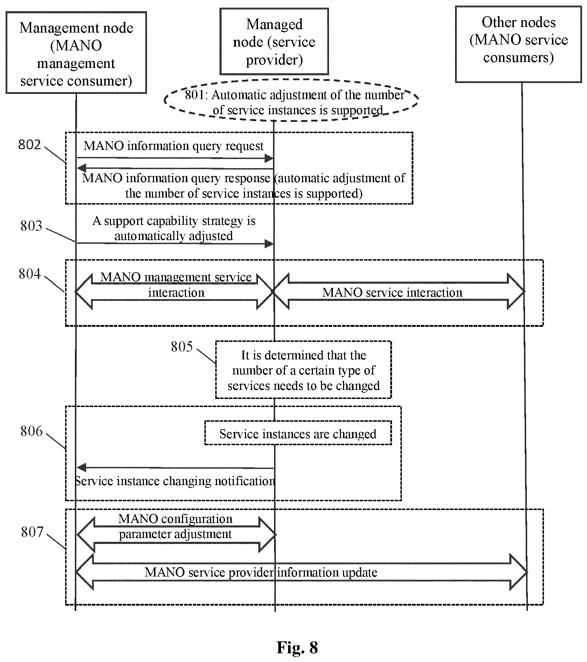

As shown in Fig. 8, by adopting the present embodiment, automatic online adjustment of the number of service instances of a managed node may be realized, and the use scenario example is as follows: in the early stage of network deployment, the VNFM mainly provides a life cycle service of the VNF. At this time, multiple VNF life cycle service entities need to be provided in the VNFM entity. After the deployment is completed, a stable operation period is entered, users gradually increase various tasks such as performance management and fault monitoring, the demand of maintenance management services is increased, the number of maintenance management service instances may be increased.

The content of the present disclosure is completed in combination by the following operations.

In operation 801, a managed node supports online adjustment of the number of service instances, and in addition to carrying various information required for initial deployment of the managed node, an information model of the managed node also indicates that automatic adjustment of the number of service instances is supported.

In operation 802, a management node uses an MANO information query request to acquire the information of the managed node, and the managed node adds information that the entity supports automatically adjusting the number of service instances in an information query response.

In operation 803, the management node issues an automatic adjustment service instance strategy to the managed node according to a deployment strategy, or a maintenance manager manually configures the automatic adjustment service instance strategy of the managed node. If the managed node does not receive the configuration information, a preset default strategy may be used or automatic adjustment is not performed.

The automatic adjustment strategy may be triggered according to performance index data during service execution, or the automatic adjustment operation may be executed according to a set time.

In operation 804, the managed node provides services, including MANO services and MANO management services, to the management node and other nodes during the running process.

In operation 805, a service type needing to be adjusted and an adjustment number are determined according to the strategy when the managed node meets an automatic strategy requirement during running.

In operation 806, the managed node completes the specified service instance number changing operation according to the requirement.

The managed node sends a change service instance notification to the management node, carrying a changed service ID.

In operation 807, the management node updates configuration information of the managed node, and updates service link information of the managed node to other NFV entities that consume the service provided by the entity.

### Exemplary Implementation 5

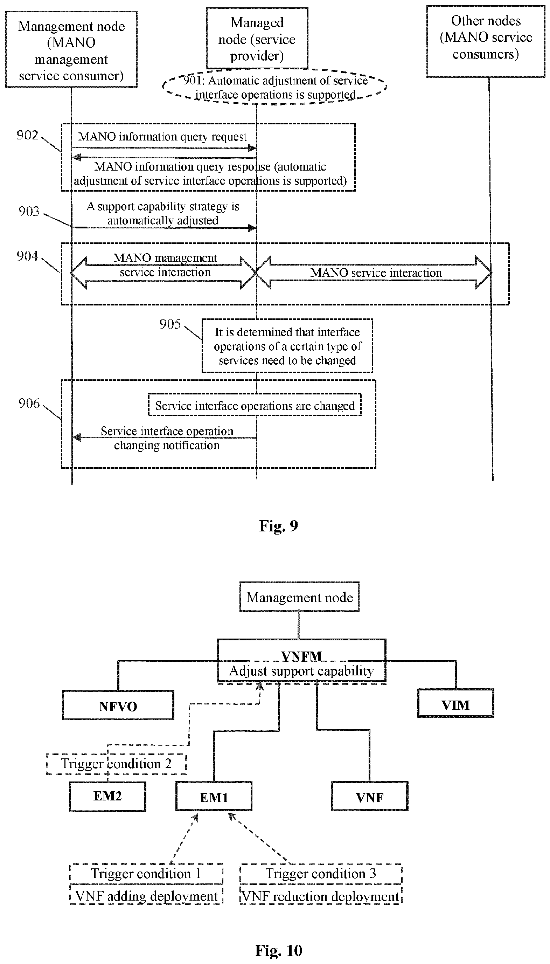

As shown in Fig. 9, by adopting the present embodiment, automatic online adjustment of a list of supported operations of a managed node and a maximum concurrent operand may be realized, and the use scenario example is as follows: in the early stages of network deployment, the capabilities of various services of an MANO entity and specification parameters of the MANO entity are planned according to current needs. After the deployment is completed, an operational period is entered where a list of supported operations and a maximum concurrent operand for the MANO service need to be changed as an NS deployed in the network is changed or VNFs forming the NS are changed.

The content of the present disclosure is completed in combination by the following operations.

In operation 901, a managed node supports online adjustment of a service interface operation, and in addition to carrying various information required for initial deployment of the managed node, an information model of the managed node also indicates that automatic adjustment of the service interface operation is supported.

In operation 902, a management node uses an MANO information query request to acquire the information of the managed node, and the managed node adds information of supporting automatic adjustment of the service interface operation in an information query response.

In operation 903, the management node issues an automatic adjustment service capability strategy to the managed node according to a deployment strategy, or a maintenance manager manually configures the automatic adjustment service interface operation strategy of the managed node. If the managed node does not receive the configuration information, a preset default strategy may be used or automatic adjustment is not performed.

The automatic adjustment strategy may be triggered according to performance index data during service execution, or the automatic adjustment may be executed according to a set time.

In operation 904, the managed node provides services, including MANO services and MANO management services, to the management node and other nodes during the running process.

In operation 905, a service instance needing to be adjusted and an interface operation adjustment target value are determined according to the strategy when the managed node meets an automatic strategy requirement during running.

In operation 906, the managed node completes the specified service instance capability changing operation according to the requirement. Relevant information in the information model is updated.

The managed node sends a change service capability notification to the management node, carrying a changed service ID and a changed support operation list and maximum concurrent operand information.

### Exemplary Implementation 6

As shown in Fig. 10, the present embodiment illustrates how VNFM support capability adjustment may be achieved by dynamically adjusting a service interface operation and the number of service instances without upgrading the VNFM using the present disclosure in conjunction with a specific usage scenario.

It is completed in combination by the following operations.

Prerequisites: a management node uses an independent deployment mode, and a VNFM entity runs application software supporting the present disclosure, supporting automatic adjustment of the service interface operation and controlled adjustment of the number of service instances.

In operation 1, initial deployment is carried out, and the number of instances of each MANO service in a VNFM information model and a supported list and a maximum concurrent operand of each service instance are designed according to a network plan.

In operation 2, under trigger condition 1, an accessed EM1 entity gradually starts to increase VNF deployment due to network service change, the VNFM automatically increases the maximum concurrent operand and applies for corresponding resources to adapt to network operation requirements after the strategy for triggering and adjusting MANO service support capability is effective. VNFM software does not need to be upgraded during this process.

In operation 3, under trigger condition 2, a new entity EM2 needs to be accessed into an existing network, in order to avoid the influence of a new entity on the existing EM1, an operation and maintenance person issues a request for increasing MANO service instances to the VNFM through the management node, after the new MANO service instance is successfully adjusted, the management node establishes a connection between the newly accessed EM2 and the new MANO service instance, and the EM2 consumes a service provided by the new MANO service instance. No influence is caused to other original entities, and the VNFM does not need to be upgraded.

In operation 4, under trigger condition 3, the EM1 entity gradually reduces the deployment of the VNF due to the network service change, after the strategy for triggering and adjusting the support capability of the MANO service is effective, the VNFM releases resources which are not used according to actual running concurrent operands, and the resource occupation of the VNFM is reduced. VNFM software does not need to be upgraded during this process.

Through the above operational embodiments, the embodiments of the present application may provide an online processing measure to support dynamic adjustment of parameter objects representing the service support capability such as the service or maximum concurrent operand supported by the MANO entity according to running environment requirements during the running of the MANO entity.

Through the description of the above implementations, those having ordinary skill in the art can understand that the method according to the above embodiment may be implemented by means of software plus a necessary general hardware platform, and of course, may also be implemented through hardware, but in many cases, the former is a better implementation. Based on such understanding, the essence of technical solution of the embodiments of the present disclosure, or in other words, the part of the technical solutions making contributions to the conventional art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

### Embodiment 2

In the present embodiment, an apparatus for providing a service is also provided, such as a management node, a managed node and a management module. The apparatus is used to implement the above embodiments and exemplary implementations, and the details having been described will not be repeated. As used below, the term "module" may implement a combination of software and/or hardware of a predetermined function. Although the apparatus described in the following embodiments is preferably implemented in software, the implementation in hardware or a combination of software and hardware is also possible and contemplated.

Fig. 3 is a structural block diagram of an apparatus according to an embodiment of the present disclosure. As shown in Fig. 3, the apparatus includes: an adjustment module 301.

The adjustment module 301 is configured to adjust, during running of an NFV-MANO, at least one service support capability of at least one service node in the NFV-MANO according to a service requirement. In the embodiment, the service node supports adjustment of the service support capability, and the service node provides a service according to the adjusted service support capability.

In one or more exemplary implementations of the embodiment, the apparatus may further include: a first determination module, configured to determine, before adjusting the service support capability of the service node in the NFV-MANO according to the service requirement, at least one adjustment pattern supported by the service node.

In one or more exemplary implementations of the embodiment, the first determination module is further configured to determine the adjustment pattern supported by the service node in the following manner: determining the adjustment pattern supported by the service node according to at least one adjustment pattern parameter. Herein, the adjustment pattern parameter is contained in configuration information of the service node.

In one or more exemplary implementations of the embodiment, the adjusting pattern parameter includes: at least one adjustment mode parameter for representing at least one service support capability parameter, supported to be adjusted, among service support capability parameters of the service node. Herein, the at least one service support capability parameter represents at least one service support capability of the service node.

In one or more exemplary implementations of the embodiment, the service support capability parameter supported to be adjusted includes at least one of the following: a service type supported by the service node, the number of service instances of a specified service type supported by the service node, an interface operation supported by the service node, and the number of concurrent operations of an interface operation supported by the service node.

In one or more exemplary implementations of the embodiment, the adjustment module includes: an adjustment sub-module, configured to adjust one or more service support capability parameters included in the at least one service support capability parameter supported to be adjusted according to an adjustment target based on the at least one service support capability parameter supported to be adjusted. Herein, the adjustment target is determined based on the service requirement and the at least one service support capability of the service node.

In one or more exemplary implementations of the embodiment, the adjusting pattern parameter may further include: an adjustment initiator parameter for representing an adjustment initiator supported by the service node. Herein, the adjustment initiator includes the service node and/or a management node of the service node.

In one or more exemplary implementations of the embodiment, the apparatus may further include: a second determination module, configured to determine, according to configuration information of the service node and before adjusting the service support capability of the service node in the NFV-MANO according to the service requirement, that the service support capability of the service node is supported to be adjusted.

In one or more exemplary implementations of the embodiment, the configuration information is an information model of the service node.

In one or more exemplary implementations of the embodiment, the apparatus may further include: a third determination module, configured to determine, before adjusting the service support capability of the service node in the NFV-MANO according to the service requirement, the service requirement according to at least one of the following: a service support capability adjustment request, information of the service node during running, and a preset deployment strategy.

In one or more exemplary implementations of the embodiment, the apparatus may further include: a fourth determination module, configured to determine, before adjusting the service support capability of the service node in the NFV-MANO according to the service requirement, that the service node meets an adjustment trigger condition. Herein, the adjustment trigger condition includes: reaching a preset adjustment time, receiving a service support capability adjustment request, or information of the service node during running meeting a preset index.

In one or more exemplary implementations of the embodiment, the apparatus may further include: an update module, configured to update, after adjusting the service support capability of the service node in the NFV-MANO according to the service requirement, at least one service support capability parameter of the service node according to the adjusted service support capability. Herein, the at least one service support capability parameter represents at least one service support capability of the service node.

In one or more exemplary implementations of the embodiment, the apparatus may further include: a service resource adjustment module, configured to apply for or release, after adjusting the service support capability of the service node in the NFV-MANO according to the service requirement, corresponding resources according to the adjusted service support capability to make resources of the service node match the service requirement.

It is to be noted that each of the above modules may be implemented by software or hardware. For the latter, the modules may be implemented by, but not limited to, either of the following manners: the above modules are all located in the same processor; or, the above modules are located in different processors in any combination form respectively.

The embodiment of the present disclosure also provides a system for providing a service, which includes the apparatus for providing the service according to any one of the embodiments and exemplary implementation of the embodiments.

### Embodiment 3

The embodiment of the present disclosure also provides a storage medium. The storage medium stores a computer program that, when run, performs the operations in any one of the above method embodiments.

In one or more exemplary implementations of the embodiment, the storage medium may be configured to store a computer program for performing the following operations.

In SI, during running of an NFV-MANO, at least one service support capability of at least one service node in the NFV-MANO is adjusted according to a service requirement, so that the service node provides a service according to the adjusted service support capability. The service node supports adjustment of the service support capability.

In one or more exemplary implementations of the embodiment, the storage medium may include, but is not limited to, various media capable of storing a computer program such as a U disk, a ROM, a RAM, a mobile hard disk, a magnetic disk or an optical disc.

The embodiment of the present disclosure also provides an electronic device. The electronic device includes a memory and a processor. The memory stores a computer program. The processor is configured to run the computer program to perform the operations in any one of the above method embodiments.

Optionally, a specific example in the present embodiment may refer to the examples described in the above embodiments and alternative implementations, and details are not described herein in the present embodiment.

It is apparent that a person skilled in the art shall understand that all of the above-mentioned modules or operations in the present disclosure may be implemented by using a general computation apparatus, may be centralized on a single computation apparatus or may be distributed on a network composed of multiple computation apparatuses. Optionally, they may be implemented by using executable program codes of the computation apparatuses. Thus, they may be stored in a storage apparatus and executed by the computation apparatuses, the shown or described operations may be executed in a sequence different from this sequence under certain conditions, or they are manufactured into each integrated circuit module respectively, or multiple modules or operations therein are manufactured into a single integrated circuit module. Thus, the embodiments of the present disclosure are not limited to any specific hardware and software combination.

The above is only the exemplary embodiments of the present disclosure, not intended to limit the present disclosure. As will occur to those having ordinary skill in the art, the present disclosure is susceptible to various modifications and changes. Any modifications, equivalent replacements, improvements and the like made within the principle of the present disclosure shall fall within the scope of protection of the present disclosure.

### Industrial Applicability

As described above, the embodiments of the disclosure provide a method, apparatus, and system for providing a service, a storage medium, and an electronic device, which have the following beneficial effects. During running of an NFV-MANO, at least one service support capability of at least one service node in the NFV-MANO is adjusted according to a service requirement. The service node supports adjustment of the service support capability, and the service node provides a service according to the adjusted service support capability, so that the service node may provide the service according to the adjusted service support capability. The flexibility of the service node is improved, and the problem in the related art that a service node cannot flexibly support a service requirement is solved.

## Claims

1. A method for providing a service, comprising:
during running of a Network Functions Virtualization Management and Orchestration system, NFV-MANO, adjusting at least one service support capability of at least one service node in the NFV-MANO according to a service requirement, wherein the service node supports adjustment of the service support capability, and the service node provides a service according to the adjusted service support capability.

2. The method according to claim 1, wherein before adjusting the service support capability of the service node in the NFV-MANO according to the service requirement, the method comprises: determining at least one adjustment pattern supported by the service node.

3. The method according to claim 2, wherein the adjustment pattern supported by the service node is determined in the following manner:
determining the adjustment pattern supported by the service node according to at least one adjustment pattern parameter, wherein the adjustment pattern parameter is contained in configuration information of the service node.

4. The method according to claim 3, wherein the adjusting pattern parameter comprises: at least one adjustment mode parameter for representing at least one service support capability parameter, supported to be adjusted, among service support capability parameters of the service node, wherein the at least one service support capability parameter represents at least one service support capability of the service node.

5. The method according to claim 4, wherein the service support capability parameter supported to be adjusted comprises at least one of the following: a service type supported by the service node, the number of service instances of a specified service type supported by the service node, an interface operation supported by the service node, and the number of concurrent operations of an interface operation supported by the service node.

6. The method according to claim 4 or 5, wherein adjusting the service support capability of the service node in the NFV-MANO according to the service requirement comprises:
adjusting one or more service support capability parameters comprised in the at least one service support capability parameter supported to be adjusted according to an adjustment target based on the at least one service support capability parameter supported to be adjusted, wherein the adjustment target is determined based on the service requirement and the at least one service support capability of the service node.

7. The method according to claim 3, wherein the adjusting pattern parameter further comprises: an adjustment initiator parameter for representing an adjustment initiator supported by the service node, wherein the adjustment initiator comprises the service node and/or a management node of the service node.

8. The method according to claim 1, wherein before adjusting the service support capability of the service node in the NFV-MANO according to the service requirement, the method further comprises: determining, according to configuration information of the service node, that the service support capability of the service node is supported to be adjusted.

9. The method according to claim 3 or 8, wherein the configuration information is an information model of the service node.

10. The method according to claim 1, wherein before adjusting the service support capability of the service node in the NFV-MANO according to the service requirement, the method further comprises:
determining the service requirement according to at least one of the following: a service support capability adjustment request, information of the service node during running, and a preset deployment strategy.

11. The method according to claim 1, wherein before adjusting the service support capability of the service node in the NFV-MANO according to the service requirement, the method further comprises:
determining that the service node meets an adjustment trigger condition, wherein the adjustment trigger condition comprises: reaching a preset adjustment time, receiving a service support capability adjustment request, or information of the service node during running meeting a preset index.

12. The method according to claim 1, wherein after adjusting the service support capability of the service node in the NFV-MANO according to the service requirement, the method comprises: updating at least one service support capability parameter of the service node according to the adjusted service support capability, wherein the at least one service support capability parameter represents at least one service support capability of the service node.

13. The method according to claim 1, wherein after adjusting the service support capability of the service node in the NFV-MANO according to the service requirement, the method further comprises:
applying for or releasing corresponding resources according to the adjusted service support capability to make resources of the service node match the service requirement.

14. An apparatus for providing a service, comprising:
an adjustment module, configured to adjust, during running of a Network Functions Virtualization Management and Orchestration system, NFV-MANO, at least one service support capability of at least one service node in the NFV-MANO according to a service requirement, wherein the service node supports adjustment of the service support capability, and the service node provides a service according to the adjusted service support capability.

15. The apparatus according to claim 14, further comprising:
a first determination module, configured to determine, before adjusting the service support capability of the service node in the NFV-MANO according to the service requirement, at least one adjustment pattern supported by the service node.

16. The apparatus according to claim 15, wherein the first determination module is further configured to determine the adjustment pattern supported by the service node in the following manner:
determining the adjustment pattern supported by the service node according to at least one adjustment pattern parameter, wherein the adjustment pattern parameter is contained in configuration information of the service node.

17. The apparatus according to claim 16, wherein the adjusting pattern parameter comprises: at least one adjustment mode parameter for representing at least one service support capability parameter, supported to be adjusted, among service support capability parameters of the service node, wherein the at least one service support capability parameter represents at least one service support capability of the service node.

18. The apparatus according to claim 17, wherein the service support capability parameter supported to be adjusted comprises at least one of the following: a service type supported by the service node, the number of service instances of a specified service type supported by the service node, an interface operation supported by the service node, and the number of concurrent operations of an interface operation supported by the service node.

19. The apparatus according to claim 17 or 18, wherein the adjustment module comprises:
an adjustment sub-module, configured to adjust one or more service support capability parameters comprised in the at least one service support capability parameter supported to be adjusted according to an adjustment target based on the at least one service support capability parameter supported to be adjusted, wherein the adjustment target is determined based on the service requirement and the at least one service support capability of the service node.

20. The apparatus according to claim 16, wherein the adjusting pattern parameter further comprises: an adjustment initiator parameter for representing an adjustment initiator supported by the service node, wherein the adjustment initiator comprises the service node and/or a management node of the service node.

21. The apparatus according to claim 14, further comprising:
a second determination module, configured to determine, according to configuration information of the service node and before adjusting the service support capability of the service node in the NFV-MANO according to the service requirement, that the service support capability of the service node is supported to be adjusted.

22. The apparatus according to claim 16 or 21, wherein the configuration information is an information model of the service node.

23. The apparatus according to claim 14, further comprising:
a third determination module, configured to determine, before adjusting the service support capability of the service node in the NFV-MANO according to the service requirement, the service requirement according to at least one of the following: a service support capability adjustment request, information of the service node during running, and a preset deployment strategy.

24. The apparatus according to claim 14, further comprising:
a fourth determination module, configured to determine, before adjusting the service support capability of the service node in the NFV-MANO according to the service requirement, that the service node meets an adjustment trigger condition, wherein the adjustment trigger condition comprises: reaching a preset adjustment time, receiving a service support capability adjustment request, or information of the service node during running meeting a preset index.

25. The apparatus according to claim 14, further comprising:
an update module, configured to update, after adjusting the service support capability of the service node in the NFV-MANO according to the service requirement, at least one service support capability parameter of the service node according to the adjusted service support capability, wherein the at least one service support capability parameter represents at least one service support capability of the service node.

26. The apparatus according to claim 14, further comprising:
a service resource adjustment module, configured to apply for or release, after adjusting the service support capability of the service node in the NFV-MANO according to the service requirement, corresponding resources according to the adjusted service support capability to make resources of the service node match the service requirement.

27. A system for providing a service, comprising the apparatus for providing the service according to any one of claims 14 to 26.

28. A storage medium, storing a computer program that performs the method according to any one of claims 1 to 13 at runtime.

29. An electronic device, comprising a memory and a processor, wherein the memory stores a computer program, and the processor is configured to run the computer program to perform the method according to any one of claims 1 to 13.
